# DEMANDE DE BREVET EUROPEEN

(11) **EP 3 610 720 A1**
(43) Date de publication de la demande: **19.02.2020**
(21) Numéro de dépôt: 19190629.6
(22) Date de dépôt: 07.08.2019
(51) Int. Cl.: A01G 9/12

(54) **TUTEUR ORNEMENTAL TRIDIMENSIONNEL D'INTÉRIEUR OU D'EXTÉRIEUR, POUR PLANTE GRIMPANTE EN POT, PLEINE TERRE OU SCELLÉ**

(30) Priorité: 13.08.2018 FR 1800866
(71) Demandeur: Duparc, Jerome, 22410 Plourhan (FR)
(72) Inventeur: Duparc, Jerome, 22410 Plourhan (FR)

(57) **Abrégé**

Tuteur ornemental tridimensionnel d'intérieur ou d'extérieur (O), pour plante grimpante en pot (21), pleine terre ou scellé.

La présente invention (O) permet aux tuteurs (O) de devenir un objet ornemental au même titre que la plante, et permet de tuteurer celle-ci facilement par simple enfilade au cours de sa croissance. Le tuteur de l'invention (O) est constitué de trois montants (1,2,3) assemblés facilement par emboîtement à l'aide des crochets (8,9,16,17), bloqués entre eux avec une goupille (29), et formant un trépied (33). Trois stabilisateurs (13) permettent sa stabilité en pot (21), pleine terre ou scellé.

Découpé à partir de plaque de métal par laser, plasma ou autre, moulé en plastique, l'imagination des motifs ornementaux et décoratif (18 et 19) est sans limite, et en fait une invention d'application industrielle dans le secteur du commerce et du jardinage.

## Description

La présente invention concerne les tuteurs pour plantes grimpantes. Ces tuteurs sont le plus souvent constitués d'une tige en bois, métal, plastique rendant compliqué l'accroche de la plante sur ceux-ci. Ils sont aussi constitués de treillis en bois, métal, plastique, rendant compliqué la mise en pot et la notion de tridi-mention du tuteur. L'ensemble de ces tuteurs étant aussi peu esthétique, peu personnalisable.

La présente invention à pour but de rendre le tuteur esthétique en pot, pleine terre ou scellé, de faciliter la mise en place de la plante sur celui-ci et d'en faire un élément même de décoration, d'ornementation au même titre que la plante.

Cette invention comporte trois montants plats d'un seul tenant, découpé ou moulé suivant la matière le constituant et qui peuvent être de hauteur, épaisseur, largeur différente selon l'aspect voulu. Il y a un montant fixe principal, un montant mobile secondaire et un montant mobile tertiaire.

Ces trois montants comportent chacun un pied non visible après mise en place qui permet la stabilité de l'invention dans son support, pot, terre ou scellement, et une tête ornementale qui reste visible servant de tuteur ornemental. La plante sera tenu par simple enfilade de celle-ci dans les motifs ornementaux intérieurs de la tête des montants. On a donc pas besoin d'attache supplémentaire pour fixer la plante.

Le montant fixe principal se compose de :
Un pied comportant une assise support du montant, un trou de goupille, deux trous recevant les crochets du pied des montants secondaires et tertiaires, un plat plié percé et taraudé pour recevoir la tige filetée avec tampon buté caoutchouc dit stabilisateur.

Une tête ornementale comportant deux trous recevant les crochets de la tête ornementale des montants secondaires et tertiaires, ainsi que les motifs ornementaux intérieurs et les motifs ornementaux extérieurs qui sont simplement la découpe extérieur de la tête elle-même.

Le montant mobile secondaire se compose de :
Un pied comportant une assise support du montant, un trou de goupille, un crochet, un plat plié percé taraudé pour recevoir la tige filetée avec tampon buté caoutchouc dit stabilisateur.

Une tête ornementale comportant un crochet et recevant les motifs ornementaux intérieurs et les motifs ornementaux extérieurs qui sont simplement la découpe extérieure de la tête elle-même.

Le montant mobile tertiaire se compose :
Un pied comportant une assise support du montant, un trou de goupille, un crochet, un plat plié percé taraudé pour recevoir la tige filetée avec tampon buté caoutchouc dit stabilisateur.

Une tête ornementale comportant un crochet et recevant les motifs ornementaux intérieurs et les motifs ornementaux extérieurs qui sont simplement la découpe extérieure de la tête elle-même.

L'assise est découpé dans le pied du montant de manière à ne laisser qu'une petite section, et à laisser libre une fois assemblé le trou de drainage du pot de fleur, généralement centré au fond de celui-ci. Une fois assemblé les trois assises forment un trépied naturellement stable qui supporte l'invention.

Le trou de goupille sur chacun des pieds de montant est de section légèrement supérieure à la goupille de manière à ce que celle-ci puisse pénétrer dans le trou sans effort. Tous les trous de goupille sont situé sur le même plan et à distance égale sur chaque montant.

La goupille plate ronde est d'un diamètre équivalant aux cotes des trous de goupille une fois assemblée. La goupille dispose d'une ouverture d'épaisseur légèrement supérieure à l'épaisseur des montants de manière à pouvoir laisser passer ceux-ci pour l'assemblage. Elle permet de bloquer les montants l'un par rapport à l'autre par simple montage, aucune translation n'est possible selon l'axe longitudinal.

Les plats pliés ou moulés suivant le matériaux utilisé, accueillent un trou taraudé à la dimension de la tige filetée. Ils sont dimensionnés en fonction de la taille du tuteur.

La tige filetée peut se visser dans le trou taraudé du plat plié ou moulé suivant le matériaux utilisé afin de pouvoir venir par simple vissage contre le contenant. Un tampon butée caoutchouc est mis au bout de la tige filetée afin de protéger le contenant du serrage de la tige filetée sur celui-ci.

Les trous de crochets sur le montant principal sont alignés avec les crochets du montant secondaire et tertiaire. Ils sont doublés en hauteur de manière à ce que le crochet puisse entrer dans le trou de crochet et s'emboîter dans celui-ci. La dimension du crochet est calculé pour être de dimension à l'angle de l'assemblage formant un hexagone. Les montants sont ainsi assemblés et solidaire l'un à l'autre, en haut avec les crochets et trous de crochet de la tête ornementale et en bas avec les crochets et trous de crochet du pied des montants.

La description et les figures ci-joints représentent un exemple de la réalisation de l'invention fabriqué en métal, dans un pot de fleur ou contenant. Découpé dans des plaques de métal par laser pour la précision, l'imagination des motifs est sans limite.

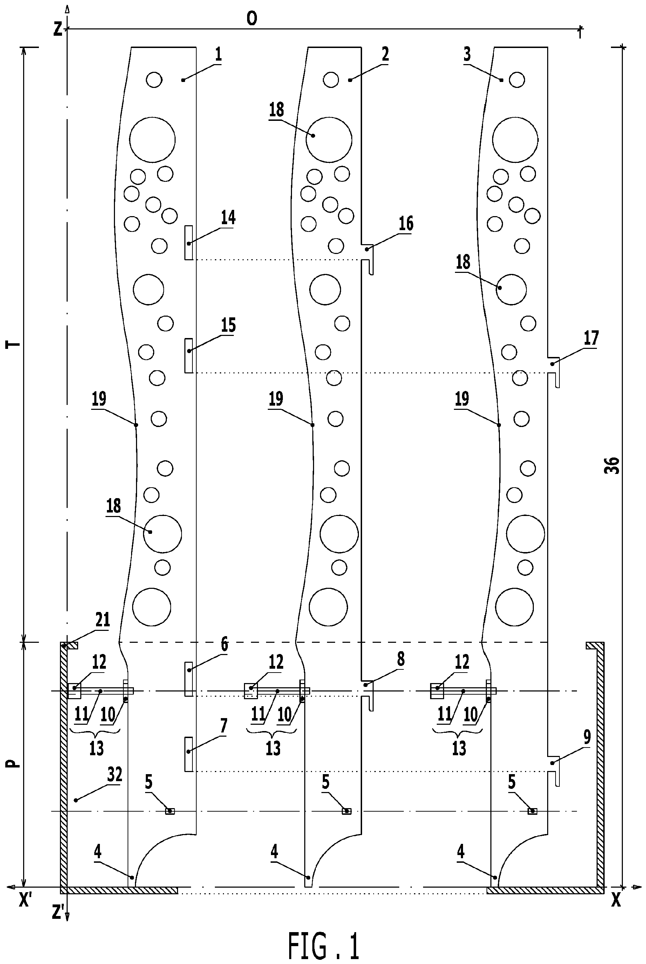

La figure 1 est une vue de face des trois montants sur le même axe de niveau XX' fond du pot de fleur, on visualise alors le niveau des crochets du montant secondaire et tertiaire par rapport à leur trou de crochet sur le montant primaire, on observe également que les trois trous de goupille sont au même niveau ainsi que les stabilisateurs.

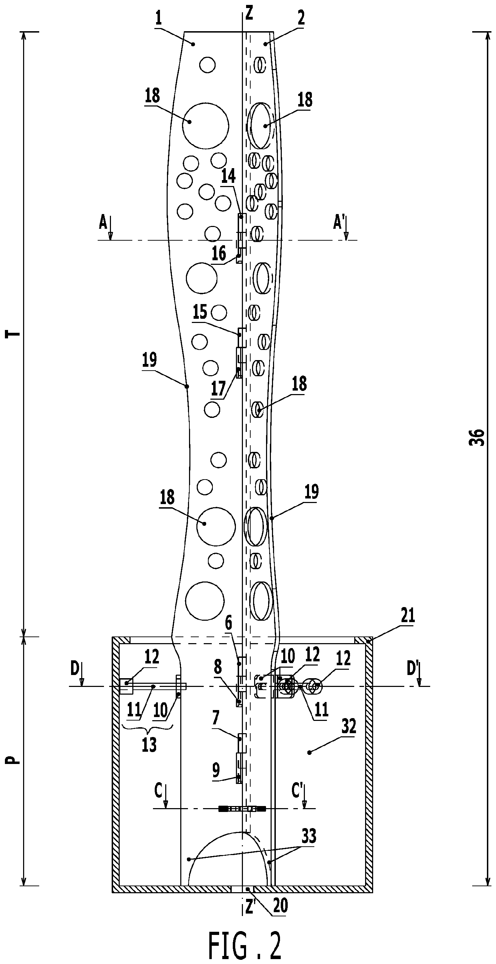

La figure 2 est une vue de face du montant primaire avec l'intégralité de l'invention et la coupe du contenant.

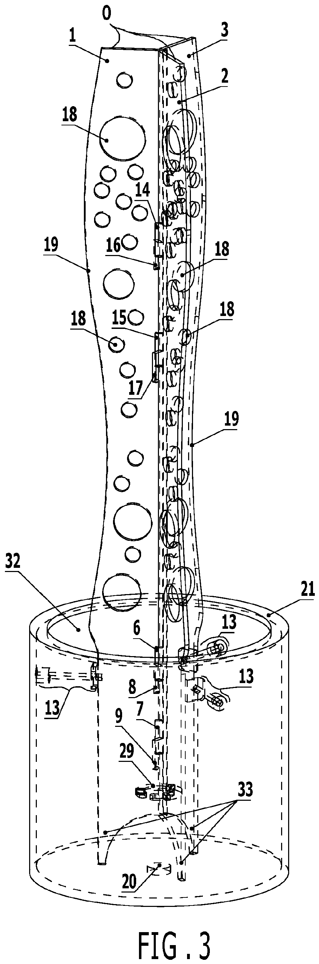

La figure 3 est une perspective de l'invention dans son contenant.

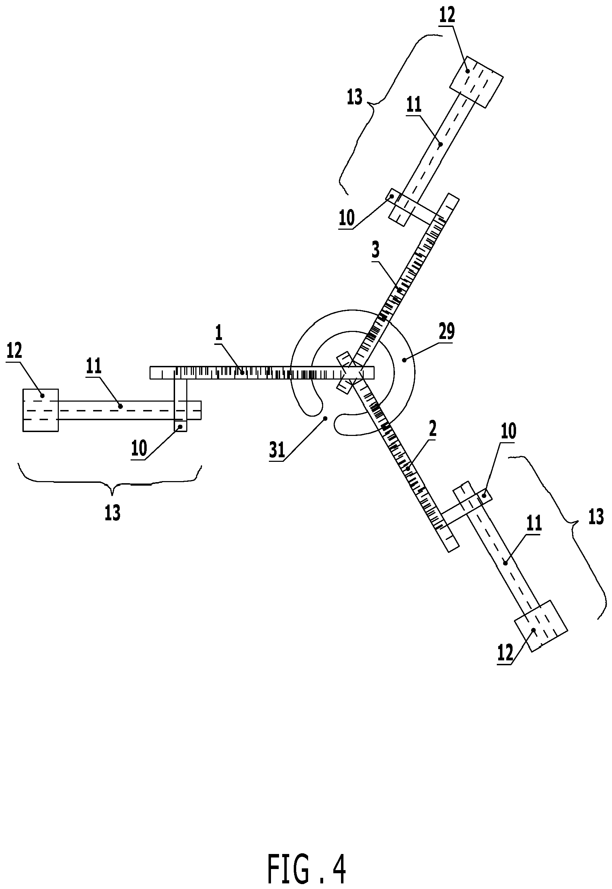

La figure 4 est une vue de dessus de l'invention.
La figure 5 est une coupe suivant AA' de la figure 2, coupe sur le trou de crochet de la tête ornementale du montant primaire et de son crochet de la tête ornementale du montant secondaire.

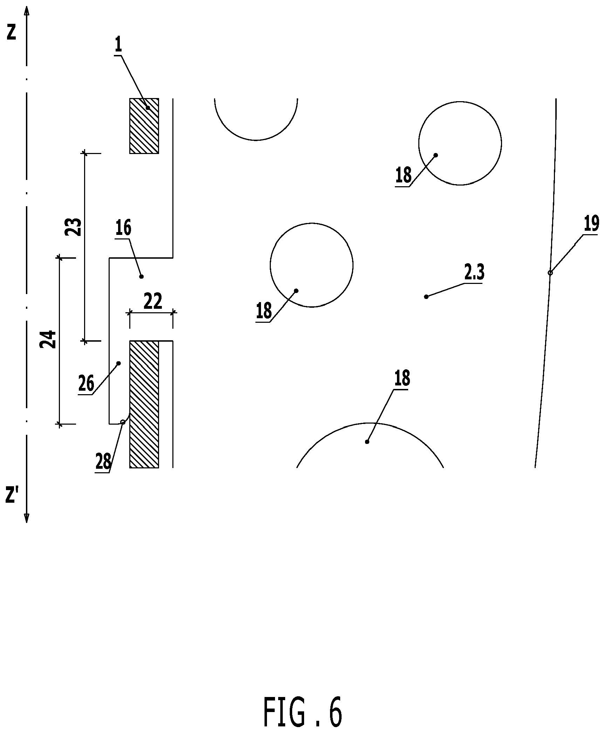

La figure 6 est une coupe suivant BB' de la figure 5, coupe sur le trou de crochet de la tête ornementale du montant primaire et de son crochet de la tête ornementale du montant secondaire.

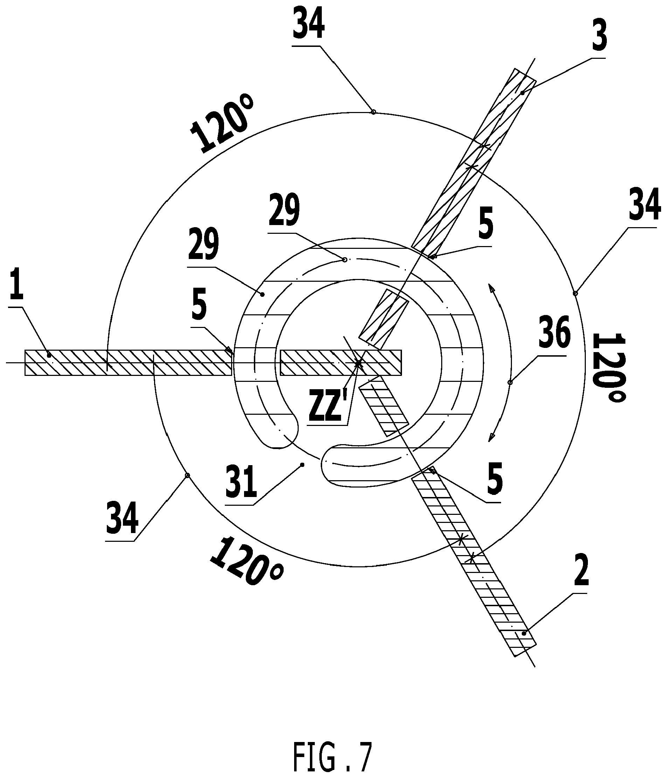

La figure 7 est une coupe suivant CC' de la figure 2, coupe sur la goupille et trous de goupilles des montants.

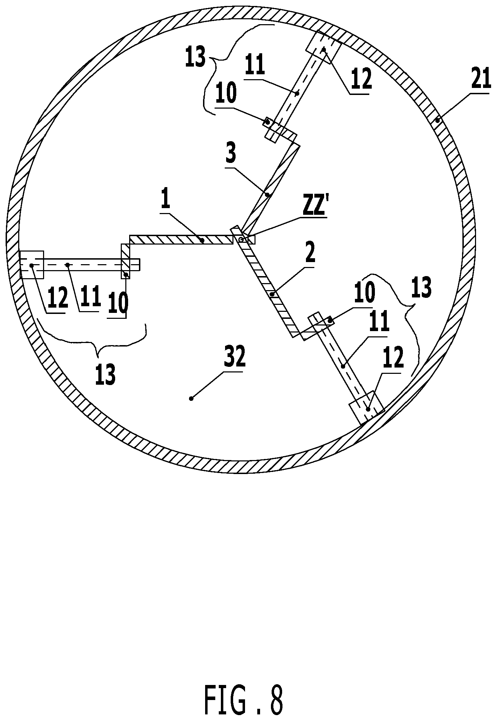

La figure 8 est une coupe suivant DD' de la figure 2, coupe sur les stabilisateurs des montants dans son contenant.

Cette invention (O) comporte trois montants métalliques plats (1,2,3) de hauteur (36), épaisseur (35), largeur égale. Tous ces plats sont découpés d'un seul tenant selon des plans définis. Il y a un montant fixe principal (1), un montant mobile secondaire (2) et un montant mobile tertiaire (3). Ces trois montants (1,2,3) comportent chacun un pied (P) et une tête ornementale (T).

Le montant fixe principal (1) se compose de :
Un pied (P1) comportant une assise (4) support du montant (1), un trou de goupille (5), un trou de crochet (6) recevant le crochet (8) du pied (P2) du montant secondaire (2), un trou de crochet (7) recevant le crochet (9) du pied (P3) du montant tertiaire (3), un plat plié percé et taraudé (10) pour recevoir la tige filetée (11) avec tampon buté caoutchouc (12) dit stabilisateur (13).

Une tête ornementale (T1) comportant un trou de crochet (14) recevant le crochet (16) de la tête ornementale (T2) du montant secondaire (2), un trou de crochet (15) recevant le crochet (17) de la tête ornementale (T3) du montant tertiaire (3), les motifs ornementaux intérieurs (18) et les motifs ornementaux extérieurs (19) qui sont simplement la découpe extérieure de la tête (T1) elle-même.

Le montant mobile secondaire (2) se compose de :
Un pied (P2) comportant une assise (4) support du montant (2), un trou de goupille (5), un crochet (8), un plat plié percé taraudé (10) pour recevoir la tige filetée (11) avec tampon buté caoutchouc (12) dit stabilisateur (13).

Une tête ornementale (T2) comportant un crochet (16) et recevant les motifs ornementaux intérieurs (18) et les motifs ornementaux extérieurs (19) qui sont simplement la découpe extérieure de la tête (T2) elle-même.

Le montant mobile tertiaire (3) se compose :
Un pied (P3) comportant une assise (4) support du montant (3), un trou de goupille (5), un crochet (9), un plat plié percé taraudé (10) pour recevoir la tige filetée (11) avec tampon buté caoutchouc (12) dit stabilisateur (13).

Une tête ornementale (T3) comportant un crochet (17) et recevant les motifs ornementaux intérieurs (18) et les motifs ornementaux extérieurs (19) qui sont simplement la découpe extérieure de la tête (T3) elle-même.

L'assise (4) est découpée dans les montants (1,2,3) de manière à ne laisser qu'une petite section, et une foi assemblé à laisser libre le trou de drainage (20) du pot de fleur (21). Assemblé les trois assises (4) forment un trépied (33) d'angle égal à 3 fois 120° (34), naturellement stable qui supporte l'invention (O).

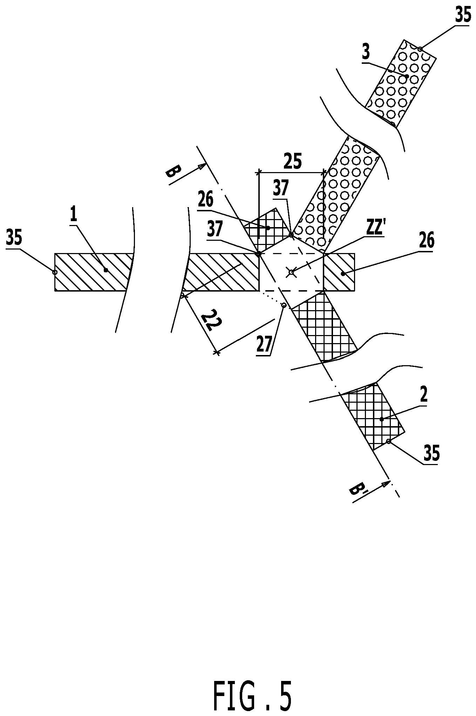

Les crochets (8,9,16,17) des montants secondaires (2) et tertiaires (3) sont alignés respectivement avec leur trou de crochet (6,7,14,15) du montant principal (1). La dimension du crochet (22) est calculée pour être de dimension à l'angle de l'assemblage ici 120° (34). La largeur des crochets (22) et la largeur des trous de crochet (25) sont de dimension identique et égale suivant calcul à 1,733 fois l'épaisseur (35) du montant (1,2,3) et plus précisément par construction géométrique égale à ((cos 60+1)/(cos 30)) dans le cas ou tous les montants sont d'épaisseur égale (fig 5). Les trous (23) de crochets (6,7,14,15) sont doublés en hauteur + 5 mm, de manière à ce que la hauteur (24) du crochet (8,9,16,17) puisse entrer respectivement dans le trou de crochet (6,7,14,15) et s'emboîter dans celui-ci, suivant un mouvement de translation vertical de Z vers Z'. On voit donc que la partie extérieure (26) du crochet (8 et 16) vient se bloquer (37) entre le montant primaire (1) et le montant tertiaire (3). Il en va de même pour la partie extérieur (26) du crochet (9 et 17) du montant tertiaire (3), ils sont bloqués (37) entre le montant primaire (1) et le montant secondaire (2). L'évidement des trous de crochet (25) et crochets (22) forment un hexagone (27) de coté l'épaisseur (35) des montants (1,2,3). L'angle (34) des montants (1,2,3) ainsi assemblé est alors de 120°. Les extérieurs (26) des crochets (8,9,16,17) seront arrondis (28) pour faciliter l'assemblage de ceux-ci.

Le trou de goupille (5) situé au dessus de l'assise (4) a une épaisseur d'1 mm supérieur à l'épaisseur de la goupille plate et ronde (29), la largeur du trou de goupille (5) sera dimensionné en fonction du diamètre intérieur de la goupille (29) et du diamètre extérieur de cette même goupille (29) + 1 mm de manière à ce que la goupille (29) puisse pénétrer dans le trou (5) sans effort. Suivant l'axe longitudinal ZZ' situé au centre de l'hexagone (27) et donc de l'invention(O), l'axe des trous de goupille (30) et la goupille (29) sont situés sur le même cercle (30) de centre ZZ' et sur le même plan de coupe CC'. La goupille (29) en place peut tourner suivant son axe ZZ', si l'ouverture de goupille (31) ne se trouve pas en face d'un des montants (1,2,3), on voit que ceux-ci sont bloqué par cette goupille (29). La goupille (29) bloque la mobilité des montants secondaires (2) et tertiaires (3) selon l'axe ZZ'.

Les plats pliés (10) sont positionnés selon la taille de l'invention (O), le pot de fleur (21) est aussi dimensionné selon celle-ci. Dans tous les cas les plats pliés, percés et taraudés (10) seront à hauteur inférieure au pot de fleur (21), de manière à rendre les stabilisateurs (13) invisibles car enterrés dans la terre (32) de celui-ci.

Les tiges filetée (11) sont aussi dimensionnés selon la taille de l'invention (O), du pot de fleur (21), du plat plié (10) et de son taraudage. Les tiges filetées (11) sont munies d'un tampon buté caoutchouc (12) de manière à protéger le pot de fleur (21) du serrage de la tige filetée (11) sur celui-ci.

Les stabilisateurs (13), association du plat plié (10), tige filetée (11) et tampon buté caoutchouc (12) rendent donc solidaire le tuteur (O) au pot de fleur (21) empêchant ainsi le basculement de l'invention (O).

Pour assembler les montants (1,2,3), il faut d'abord mettre la goupille (29) dans son trou (5) du montant principal (1), puis il faut aligner l'ouverture de la goupille (31) et les crochets (8 et 16) du second montant (2) avec les trous de crochets (6 et 14) du premier montant (1). Un fois emboîté on répète l'opération pour le troisième montant (3). L'emboîtement des crochets (8,9,16,17) bloque les trois montants (1,2,3) l'un par rapport à l'autre, aucune rotation (36) d'axe longitudinal ZZ' n'est possible. Il faut finir de tourner (36) la goupille (29) pour bloquer les trois montants (1,2,3) entre eux, aucune translation selon l'axe longitudinal Z'Z n'est possible. On visualise alors la tridi-mention de l'invention (O). Nous obtenons donc l'invention terminée, stable verticalement, simple à monter, sans soudure et adaptable à n'importe quel contenant (21). Le pot (21) rempli de terre (32) fini de stabiliser le tuteur verticalement et empêche son basculement.

L'assemblage de ces trois montants (1,2,3) constitue l'invention (O), dit tuteur ornemental tridimensionnel.

Le dispositif selon l'invention est à destination des particuliers pour décoration d'intérieure ou d'extérieure, des entreprises pour décoration d'intérieure ou d'extérieure, paysagiste, enseigne, fléchage, panneau indicateur en intérieur ou extérieur pour parc et jardin, collectivité territoriale pour décoration d'intérieure ou d'extérieure. Chaque montant étant dimensionnable et personnalisable selon sa destination. Par découpe laser ou plasma, moulage plastique, sa fabrication en fait une invention d'application industrielle dans le secteur du commerce et du jardinage.

## Revendications

1. Tuteur (O) pour plantes grimpantes **caractérisé en ce qu'**il est muni de trois montants (1,2,3) ornementaux formant un trépied (33) posé dans le fond de son contenant (21), assemblé par des crochets (8,9,16,17), bloqué avec une goupille circulaire de section rectangulaire (29) et stabilisé verticalement par trois stabilisateurs (13) venant en contact avec l'intérieur du pot ou contenant (21).

2. Tuteur (O) suivant la revendication 1, **caractérisé en ce que** les montants (1,2,3) par découpe accueillent les motifs ornementaux intérieurs (18) et extérieurs (19).

3. Tuteur (O) suivant la revendication 1, **caractérisé en ce que** les pieds (4) découpés des montants (1,2,3) sont en une seule pièce et forme un trépied (33) une fois les trois montants (1,2,3) du dit tuteur (O) assemblé.

4. Tuteur (O) suivant la revendication 1, **caractérisé en ce que** les dimensions des crochets (8,9,16,17) et des trous de crochets (6,7,14,15) sont calculées pour que les trois montants (1,2,3) forment un angle de 120° deux à deux.

5. Dispositif selon la revendication 1 **caractérisé en ce que** le Tuteur (O) comporte des trous de goupille rectangulaire (5) sur les pieds (P) de chaque montants (1,2,3) dans lesquels vient s'enfiler pendant l'assemblage du dispositif une goupille circulaire de section rectangulaire (29) légèrement inférieur à la section des trous de goupille (5).

6. Tuteur (O) suivant la revendication 1, **caractérisé en ce que** chaque montant (1,2,3) accueille un plat plié percé taraudé (10) muni d'une tige filetée (11) avec tampon buté caoutchouc (12) dit stabilisateur (13).

7. Tuteur (O) suivant la revendication 3 et 6, **caractérisé en ce que** le dispositif est solidaire de son contenant (21).
